# EUROPEAN PATENT APPLICATION

(11) **EP 2 953 286 A1**
(43) Date of publication of application: **09.12.2015**
(21) Application number: 13875935.2
(22) Date of filing: 19.02.2013
(51) Int. Cl.: H04L 1/16

(54) **DATA TRANSMISSION METHOD AND DEVICE**

(71) Applicant: Huawei Technologies Co., Ltd., Longgang District Shenzhen, Guangdong 518129 (CN)
(72) Inventor: FENG, Li, Shenzhen Guangdong 518129 (CN); ZHENG, Xiaoxiao, Shenzhen Guangdong 518129 (CN); WANG, Zongjie, Shenzhen Guangdong 518129 (CN); MA, Xueli, Shenzhen Guangdong 518129 (CN); WU, Huifang, Shenzhen Guangdong 518129 (CN)
(74) Representative: Thun, Clemens
(86) International application number: PCT/CN2013/071663
(87) International publication number: WO 2014/127503

(57) **Abstract**

The present invention discloses a data transmission method, including: sending at least two groups of same data to user equipment; and instructing the user equipment to perform softer combination on the received at least two groups of same data. Embodiments of the present invention further provide a corresponding apparatus, including: a base station, user equipment, and a radio network controller. In the technical solutions of the present invention, because the user equipment is instructed to process received data in a softer combination manner, reliability can be improved, and a call drop rate can be reduced.

## Description

### TECHNICAL FIELD

The present invention relates to the field of communications technologies, and in particular, to a data transmission method and apparatus.

### BACKGROUND

In a Universal Mobile Telecommunications System (Universal Mobile Telecommunications System, UMTS) system, downlink transmission channels include a dedicated channel (Dedicated Channel, DCH) and a high speed downlink shared channel (High speed Downlink Shared Channel, HS-DSCH); and uplink transmission channels include the DCH and an enhanced dedicated channel (Enhanced dedicated channel, E-DCH).

The HS-DSCH and the E-DCH are both high-speed packet access (High-Speed Packet Access, HSPA) channels. A circuit switched domain (Circuit Switched domain, CS) service such as a voice service may be carried on a DCH, or may be carried on an HSPA channel such as an E-DCH or an HS-DSCH. A CS service carried on an HSPA channel is referred to as CS over HSPA. The CS over HSPA requires high reliability.

A multiflow (Multiflow, MF) transmission feature is introduced in a UMTS technology, where this feature allows multiple intra-frequency or inter-frequency cells to be configured, to send same or different HS-DSCH data for same UE, so as to increase a throughput of a cell-edge user. In an existing MF solution, for same data collaboratively sent by a primary serving cell and one or more collaborative serving cells in the MF, a UE uses a selective combination method when receiving the data, that is, selectively receives data sent by one cell, but discards data sent by another cell.

However, reliability of the selective combination is not high, and when a cell-edge UE transmits data with a high requirement on reliability such as a CS over HSPA or signaling radio bearer (signaling radio bearer, SRB) service, it is exposed to a call drop.

### SUMMARY

In view of this, embodiments of the present invention provide a data transmission method and apparatus, to resolve a technical problem that reliability of an existing UMTS multiflow transmission solution is not high.

According to a first aspect, a data transmission method is provided, and the method includes: sending at least two groups of same data to user equipment; and instructing the user equipment to perform softer combination on the received at least two groups of same data.

According to the first aspect, in a first possible implementation manner, the sending at least two groups of same data to user equipment includes: sending, by a base station, the same data to the user equipment by using at least two cells; or, sending, by a base station, the same data to the user equipment by using at least two hybrid automatic repeat request HARQ processes or at least two transmission time intervals TTIs in one cell.

In a second possible implementation manner, with reference to the first aspect or the first possible implementation manner, the instructing the user equipment to perform softer combination on the received at least two groups of same data includes: adding a softer combination instruction to a downlink shared control channel HS-SCCH and sending the softer combination instruction to the user equipment, where the softer combination instruction is used to instruct the user equipment to perform softer combination on the received at least two groups of same data.

In a third possible implementation manner, with reference to the first aspect or the first possible implementation manner or the second possible implementation manner, the adding the softer combination instruction to the HS-SCCH includes: using a bit in the HS-SCCH to indicate the softer combination instruction, or using a parity relationship of a code channel occupied by the HS-SCCH to indicate the softer combination instruction.

In a fourth possible implementation manner, with reference to the first aspect or any one of the first possible implementation manner to the third possible implementation manner, the method further includes: sending a time offset configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

In a fifth possible implementation manner, with reference to the first aspect or any one of the first possible implementation manner to the fourth possible implementation manner, the method further includes: sending a HARQ process identifier Process ID combination configured by a radio network controller to the user equipment, where the HARQ Process ID combination is used to instruct the at least two cells to send the same data to the user equipment separately by using one HARQ Process ID in the HARQ Process ID combination, to instruct the user equipment to perform softer combination on data received from the at least two cells.

According to a second aspect, a data transmission method is provided, and the method includes: receiving, by user equipment, at least two groups of same data sent by a network side; and performing softer combination on the at least two groups of same data according to an instruction of the network side.

According to the second aspect, in a first possible implementation manner, the receiving, by user equipment, at least two groups of same data sent by a network side includes: receiving, by the user equipment, the at least two groups of same data that are sent by a base station by using at least two cells, or receiving the at least two groups of same data that are sent by a base station by using at least two HARQ processes or at least two transmission time intervals TTIs in one cell.

In a second possible implementation manner, with reference to the second aspect or the first possible implementation manner, the performing softer combination on the at least two groups of same data according to an instruction of the network side includes: receiving a softer combination instruction that is carried in an HS-SCCH and sent by the base station, and performing softer combination on the at least two groups of same data according to the softer combination instruction.

In a third possible implementation manner, with reference to the second aspect or the first possible implementation manner or the second possible implementation manner, the softer combination instruction is indicated by using a bit in the HS-SCCH or by using a parity relationship of a code channel occupied by the HS-SCCH.

In a fourth possible implementation manner, with reference to the second aspect or any one of the first possible implementation manner to the third possible implementation manner, the performing softer combination on the at least two groups of same data according to an instruction of the network side includes: receiving a time offset from a radio network controller, and performing softer combination on data that is received from the at least two cells within a time indicated by the time offset.

In a fifth possible implementation manner, with reference to the second aspect or any one of the first possible implementation manner to the fourth possible implementation manner, the performing softer combination on data that is received from the at least two cells within a time indicated by the time offset includes: performing softer combination on received HS-DSCH data of a cell whose paired subframe is earlier in multiflow transmission, and HS-DSCH data, received within the time indicated by the time offset, of a cell whose paired subframe is later in multiflow transmission; or performing softer combination on HS-DSCH data received by a receiving reference cell, and HS-DSCH data received by a non-receiving reference cell within the time indicated by the time offset.

In a sixth possible implementation manner, with reference to the second aspect or any one of the first possible implementation manner to the fifth possible implementation manner, the performing softer combination on the at least two groups of same data according to an instruction of the network side includes: receiving a HARQ Process ID combination from a radio network controller, and performing softer combination on received data that is sent by the at least two cells by using a HARQ Process ID that belongs to the HARQ Process ID combination.

According to a third aspect, a data transmission method is provided, and the method includes: sending, by a radio network controller, instruction information to a base station, to instruct the base station to send at least two groups of same data to user equipment; and sending, by the radio network controller, instruction information to the user equipment, to instruct the user equipment to perform softer combination on the received at least two groups of same data.

According to the third aspect, in a first possible implementation manner, the instructing the base station to send at least two groups of same data to user equipment includes: instructing the base station to send the same data to the user equipment by using at least two cells, or send the same data to the user equipment by using at least two HARQ processes or at least two TTIs in one cell.

In a second possible implementation manner, with reference to the third aspect or the first possible implementation manner, the instruction information is specifically a softer combination instruction, and the sending, by a radio network controller, instruction information to a base station includes: adding the softer combination instruction to an HS-DSCH frame protocol FP and sending the softer combination instruction to the base station, to instruct the base station to send the at least two groups of same data to the user equipment.

In a third possible implementation manner, with reference to the third aspect or the first possible implementation manner or the second possible implementation manner, the instruction information is specifically a softer combination instruction, and the sending, by a radio network controller, instruction information to a base station includes: configuring the softer combination instruction in radio link setup or addition or reconfiguration request signaling based on a MAC-d flow identifier or a queue identifier or a logical channel identifier, to instruct the base station to send the at least two groups of same data to the user equipment.

In a fourth possible implementation manner, with reference to the third aspect or any one of the first possible implementation manner to the third possible implementation manner, the instruction information is specifically a time offset configured by the radio network controller, and is used to indicate a maximum interval between time points at which the at least two cells send the same data to the user equipment, and instruct the user equipment to perform softer combination on data that is received from the at least two cells within a time indicated by the time offset.

In a fifth possible implementation manner, with reference to the third aspect or any one of the first possible implementation manner to the fourth possible implementation manner, the instruction information is specifically a HARQ Process ID combination configured by the radio network controller, and is used to instruct the at least two cells to send the same data to the user equipment separately by using one HARQ Process ID in the HARQ Process ID combination, and instruct the user equipment to perform softer combination on data received from the at least two cells.

According to a fourth aspect, a base station is provided, and the base station includes: a sending module, configured to send at least two groups of same data to user equipment; and an instruction module, configured to instruct the user equipment to perform softer combination on the received at least two groups of same data.

According to the fourth aspect, in a first possible implementation manner, the sending module is specifically configured to send the same data to the user equipment by using at least two cells, or send the same data to the user equipment by using at least two HARQ processes or at least two TTIs in one cell.

In a second possible implementation manner, with reference to the fourth aspect or the first possible implementation manner, the instruction module is specifically configured to add a softer combination instruction to an HS-SCCH and send the softer combination instruction to the user equipment, to instruct the user equipment to perform softer combination on the received same data sent by the at least two cells.

In a third possible implementation manner, with reference to the fourth aspect or the first possible implementation manner or the second possible implementation manner, the instruction module is specifically configured to use a bit in the HS-SCCH to indicate the softer combination instruction, or use a parity relationship of a code channel occupied by the HS-SCCH to indicate the softer combination instruction.

In a fourth possible implementation manner, with reference to the fourth aspect or any one of the first possible implementation manner to the third possible implementation manner, the instruction module is specifically configured to send a time offset configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

In a fifth possible implementation manner, with reference to the fourth aspect or any one of the first possible implementation manner to the fourth possible implementation manner, the instruction module is specifically configured to send a HARQ process identifier Process ID combination configured by a radio network controller to the user equipment, where the HARQ Process ID combination is used to instruct the at least two cells to send the same data to the user equipment separately by using one HARQ Process ID in the HARQ Process ID combination, to instruct the user equipment to perform softer combination on data received from the at least two cells.

According to a fifth aspect, user equipment is provided, and the user equipment includes: a receiving module, configured to receive at least two groups of same data sent by a network side; and a softer combination module, configured to perform softer combination on the at least two groups of same data according to an instruction of the network side.

According to the fifth aspect, in a first possible implementation manner, the receiving module is specifically configured to receive the same data that is sent by a base station by using at least two cells, or receive the same data that is sent by a base station by using at least two HARQ processes or at least two TTIs in one cell.

In a second possible implementation manner, with reference to the fifth aspect or the first possible implementation manner, the receiving module is further configured to receive a softer combination instruction that is carried in an HS-SCCH and sent by the base station; and the softer combination module is specifically configured to perform softer combination on the data of the at least two groups of data according to the softer combination instruction.

In a third possible implementation manner, with reference to the fifth aspect or the first possible implementation manner or the second possible implementation manner, the receiving module is further configured to receive a time offset from a radio network controller; and the softer combination module is specifically configured to perform softer combination on data that is received from the at least two cells within a time indicated by the time offset.

In a fourth possible implementation manner, with reference to the fifth aspect or any one of the first possible implementation manner to the third possible implementation manner, the receiving module is further configured to receive a HARQ Process ID combination from a radio network controller; and the softer combination module is specifically configured to perform softer combination on received data that is sent by the at least two cells by using a HARQ Process ID that belongs to the HARQ Process ID combination.

According to a sixth aspect, a radio network controller is provided, and the radio network controller includes: a generating module, configured to generate instruction information; and a sending module, configured to send the instruction information to a base station and user equipment, to instruct the base station to send at least two groups of same data to the user equipment, and instruct the user equipment to perform softer combination on the received at least two groups of same data.

According to a sixth aspect, in a first possible implementation manner, the instruction information is specifically used to instruct the base station to send the same data to the user equipment by using at least two cells, or send the same data to the user equipment by using at least two HARQ processes or at least two TTIs in one cell.

In a second possible implementation manner, with reference to the sixth aspect or the first possible implementation manner, the generating module is specifically configured to generate a softer combination instruction as the instruction information; and the sending module is specifically configured to add the softer combination instruction to an HS-DSCH frame protocol FP and send the softer combination instruction to the base station, to instruct the base station to send the at least two groups of same data to the user equipment.

In a third possible implementation manner, with reference to the sixth aspect or the first possible implementation manner or the second possible implementation manner, the generating module is specifically configured to generate a softer combination instruction as the instruction information; and the sending module is specifically configured to configure the softer combination instruction in radio link setup or addition or reconfiguration request signaling based on a MAC-d flow or a queue or a logical channel ID, to instruct the base station to send the at least two groups of same data to the user equipment.

In a fourth possible implementation manner, with reference to the sixth aspect or any one of the first possible implementation manner to the third possible implementation manner, the generating module is specifically configured to configure a time offset as the instruction information, where the time offset is used to indicate a maximum interval between time points at which the at least two cells send the same data to the user equipment, and instruct the user equipment to perform softer combination on data that is received from the at least two cells within a time indicated by the time offset.

In a fifth possible implementation manner, with reference to the sixth aspect or any one of the first possible implementation manner to the fourth possible implementation manner, the generating module is specifically configured to configure a HARQ Process ID combination as the instruction information, where the HARQ Process ID combination is used to instruct the at least two cells to send the same data to the user equipment separately by using one HARQ Process ID in the HARQ Process ID combination, and instruct the user equipment to perform softer combination on data received from the at least two cells.

According to a seventh aspect, a base station is provided, and the base station includes: a transmitter, configured to send at least two groups of same data to user equipment; and a processor, configured to generate instruction information, where the instruction information is sent to the user equipment by using the transmitter, and is used to instruct the user equipment to perform softer combination on the received at least two groups of same data.

According to the seventh aspect, in a first possible implementation manner, the transmitter is specifically configured to send the same data to the user equipment by using at least two cells, or send the same data to the user equipment by using at least two HARQ processes or at least two TTIs in one cell.

In a second possible implementation manner, with reference to the seventh aspect or the first possible implementation manner, the processor is configured to generate a softer combination instruction as the instruction information; and the transmitter is further configured to add the softer combination instruction to an HS-SCCH and send the softer combination instruction to the user equipment, where the softer combination instruction is used to instruct the user equipment to perform softer combination on the received at least two groups of same data.

In a third possible implementation manner, with reference to the seventh aspect or the first possible implementation manner or the second possible implementation manner, the transmitter is further configured to send a time offset configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

In a fourth possible implementation manner, with reference to the seventh aspect or any one of the first possible implementation manner to the third possible implementation manner, the transmitter is further configured to send a HARQ Process ID combination configured by a radio network controller to the user equipment, where the HARQ Process ID combination is used to instruct the at least two cells to send the same data to the user equipment separately by using one HARQ Process ID in the HARQ Process ID combination, to instruct the user equipment to perform softer combination on data received from the at least two cells.

According to an eighth aspect, user equipment is provided, and the user equipment includes: a receiver, configured to receive at least two groups of same data sent by a network side; and a processor, configured to perform softer combination on the at least two groups of same data according to an instruction of the network side.

According to the eighth aspect, in a first possible implementation manner, the receiver is specifically configured to receive the same data that is sent by a base station by using at least two cells, or receive the same data that is sent by a base station by using at least two HARQ processes or at least two TTIs in one cell.

In a second possible implementation manner, with reference to the eighth aspect or the first possible implementation manner, the receiver is further configured to receive a softer combination instruction that is carried in an HS-SCCH and sent by the base station; and the processor is specifically configured to perform softer combination on the at least two groups of same data according to the softer combination instruction.

In a third possible implementation manner, with reference to the eighth aspect or the first possible implementation manner or the second possible implementation manner, the receiver is further configured to receive a time offset from a radio network controller; and the processor is specifically configured to perform softer combination on data that is received from the at least two cells within a time indicated by the time offset.

In a fourth possible implementation manner, with reference to the eighth aspect or any one of the first possible implementation manner to the third possible implementation manner, the receiver is further configured to receive a HARQ Process ID combination from a radio network controller; and the processor is specifically configured to perform softer combination on received data that is sent by the at least two cells by using a HARQ Process ID that belongs to the HARQ Process ID combination.

According to a ninth aspect, a radio network controller is provided, and the radio network controller includes: a processor, configured to generate instruction information; and a transmitter, configured to send the instruction information to a base station and user equipment, to instruct the base station to send at least two groups of same data to the user equipment, and instruct the user equipment to perform softer combination on the received at least two groups of same data.

According to the ninth aspect, in a first possible implementation manner, the instruction information is specifically used to instruct the base station to send the same data to the user equipment by using at least two cells, or send the same data to the user equipment by using at least two HARQ processes or at least two TTIs in one cell.

In a second possible implementation manner, with reference to the ninth aspect or the first possible implementation manner, the processor is specifically configured to generate a softer combination instruction as the instruction information; and the transmitter is specifically configured to add the softer combination instruction to an HS-DSCH frame protocol FP and send the softer combination instruction to the base station, to instruct the base station to send the at least two groups of same data to the user equipment.

In a third possible implementation manner, with reference to the ninth aspect or the first possible implementation manner or the second possible implementation manner, the processor is specifically configured to generate a softer combination instruction as the instruction information; and the transmitter is specifically configured to configure the softer combination instruction in radio link setup or addition or reconfiguration request signaling based on a MAC-d flow or a queue or a logical channel ID, to instruct the base station to send the at least two groups of same data to the user equipment.

In a fourth possible implementation manner, with reference to the ninth aspect or any one of the first possible implementation manner to the third possible implementation manner, the processor is specifically configured to configure a time offset as the instruction information, where the time offset is used to indicate a maximum interval between time points at which the at least two cells send the same data to the user equipment, and instruct the user equipment to perform softer combination on data that is received from the at least two cells within a time indicated by the time offset.

In a fifth possible implementation manner, with reference to the ninth aspect or any one of the first possible implementation manner to the fourth possible implementation manner, the processor is specifically configured to configure a HARQ Process ID combination as the instruction information, where the HARQ Process ID combination is used to instruct the at least two cells to send the same data to the user equipment separately by using one HARQ Process ID in the HARQ Process ID combination, and instruct the user equipment to perform softer combination on data received from the at least two cells.

The embodiments of the present invention use a technical solution in which a network side sends at least two groups of same data to user equipment and instructs the user equipment to perform softer combination on the received at least two groups of same data, so that in a UMTS multiflow transmission solution, the user equipment may process the received data in a more reliable softer combination manner, thereby improving reliability, and reducing a call drop rate.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a data transmission method according to an embodiment of the present invention;
FIG. 2 is a flowchart of an implementation manner of implementing softer combination by using a softer combination instruction;
FIG. 3 is a schematic diagram of paired subframes in multiflow transmission;
FIG. 4 is a flowchart of an implementation manner of implementing softer combination by configuring a time offset;
FIG. 5 is a schematic diagram of paired subframes in an implementation manner;
FIG. 6 is a flowchart of an implementation manner of implementing softer combination by configuring a HARQ Process ID combination;
FIG. 7 is a schematic diagram of paired subframes in an implementation manner;
FIG. 8 is a flowchart of a data transmission method according to another embodiment of the present invention;
FIG. 9 is a flowchart of a data transmission method according to still another embodiment of the present invention;
FIG. 10 is a schematic diagram of a base station according to an embodiment of the present invention;
FIG. 11 is a schematic diagram of user equipment according to an embodiment of the present invention;
FIG. 12 is a schematic diagram of a radio network controller according to an embodiment of the present invention;
FIG. 13 is a schematic diagram of a base station according to another embodiment of the present invention;
FIG. 14 is a schematic diagram of user equipment according to another embodiment of the present invention; and
FIG. 15 is a schematic diagram of a radio network controller according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

Various aspects are described in this specification with reference to user equipment and/or a base station and/or a base station controller.

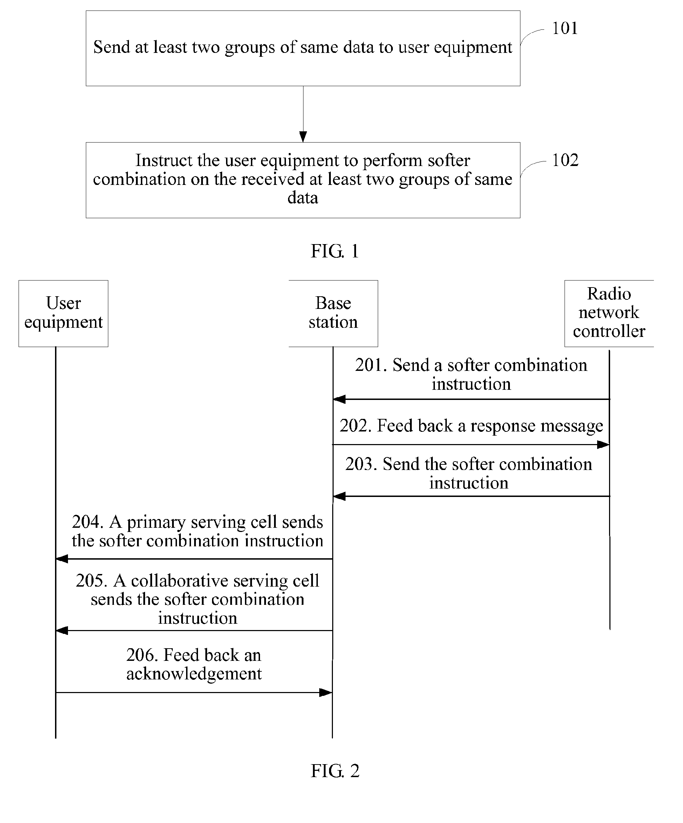

Referring to FIG. 1, an embodiment of the present invention provides a data transmission method, and the method is applied in the field of multiflow transmission based on a UMTS system.
101. Send at least two groups of same data to user equipment.

When user equipment (UE) is in a multiflow transmission state, a base station on a network side may send at least two groups of same data to the user equipment so as to improve transmission reliability. The same data may be understood as a same group of data. In other words, a group of data is sent to the user equipment through different paths. For example, the base station may send the at least two groups of same data to the user equipment by using at least two cells, where the at least two cells may be cells that belong to a same base station, or may be cells of different base stations; or the base station may send the at least two groups of same data to the user equipment by using at least two hybrid automatic repeat request (Hybrid Automatic Repeat Request, HARQ) processes (Process) in one cell or at least two transmission time intervals (Transmission Time Interval, TTI) in one cell.

Before sending data, the base station needs to first determine whether the data needs to be scheduled by using at least two cells, or at least two HARQ processes in one cell or at least two TTIs in one cell, where there are two manners of the determining. In one manner, the base station performs determining according to a preset policy, for example, determines according to a priority to schedule HS-DSCH data that is corresponding to a high-priority queue (queue) to the UE by using at least two cells; or determines, according to a priority and UE power headroom (UPH) when UPH reported by the UE is small, to schedule HS-DSCH data that is corresponding to a high-priority queue (queue) to the UE by using at least two cells. In the other manner, instruction information configured by a radio network controller (Radio Network Controller, RNC) such as a softer combination instruction is acquired, and it is determined according to the softer combination instruction that data of the UE needs to be scheduled by using at least two cells, or at least two HARQ processes in one cell or at least two TTIs in one cell. When the UE is in the multiflow transmission state, the RNC may configure a softer combination instruction in signaling such as a radio link setup or addition or reconfiguration request (Radio Link Setup Request or Addition Request or reconfiguration Request) based on a single MAC for dedicated channels flow (MAC for dedicated channels flow, MAC-d flow) or a queue (queue) or a logical channel identifier (ID), where the softer combination instruction may be indicated by using one or several bits, and is used to indicate that HS-DSCH data corresponding to the MAC-d flow or the queue or the logical channel ID needs to be scheduled to the UE by using at least two cells, or at least two HARQ processes in one cell or at least two TTIs in one cell.
102: Instruct the user equipment to perform softer combination on the received at least two groups of same data.

When or after sending the at least two groups of same data to the UE by using the at least two cells, or the at least two HARQ processes in one cell or the at least two TTIs in one cell, the base station further needs to instruct the UE to perform softer combination on the received at least two groups of same data. Therefore, the UE needs to have a capability of performing softer combination. The softer combination is pre-decoding soft-bit combination, and may also be referred to as softer handover combination or HARQ combination. Compared with selective combination, this combination manner has higher reliability.

In conclusion, this embodiment of the present invention provides a data transmission method, and uses a technical solution in which a network side sends at least two groups of same data to user equipment and instructs the user equipment to perform softer combination on the received at least two groups of same data, so that in a UMTS multiflow transmission solution, the user equipment may process the received data in a more reliable softer combination manner, thereby improving reliability, and reducing a call drop rate.

In an implementation manner shown in FIG. 2, the instructing the user equipment to perform softer combination on the received at least two groups of same data in 102 may include: adding a softer combination instruction to a downlink shared control channel (HSPA High-Shared Control Channel, HS-SCCH) and sending the softer combination instruction to the user equipment, to instruct the user equipment to perform softer combination on the received at least two groups of same data.

In step 201 shown in FIG. 2, the RNC may add, based on a single MAC-d flow or queue or a logical channel ID, a softer combination instruction (RADIO LINK REFIGURATION REQUEST) to the signaling such as a Radio Link Setup Request or Addition Request or a reconfiguration Request, and send the softer combination instruction to the base station, to instruct at least two cells that participate in multiflow transmission, or at least two HARQ processes in one cell or at least two TTIs in one cell, to send same data to the user equipment, where the same data that needs to be sent is HS-DSCH data corresponding to the MAC-d flow or the queue or the logical channel ID; that is, when sending the data corresponding to the MAC-d flow or the queue or the logical channel ID, the base station uses a manner in which multiple cells send the same data, or uses a manner in which at least two HARQ processes in one cell or at least two TTIs in one cell send the same data. After receiving the softer combination instruction, the base station feeds back a response message (RADIO LINK REFIGURATION RESPONSE) to the RNC, as shown in step 202 in FIG. 2.

In step 203 shown in FIG. 2, the RNC may also add the softer combination instruction to an HS-DSCH frame protocol (FP) sent to the base station, to instruct the base station to send the same data to the user equipment by using at least two cells that participate in multiflow transmission, or at least two HARQ processes in one cell or at least two TTIs in one cell, where the same data that needs to be sent is data carried in the HS-DSCH FP; that is, when sending the data in the FP that carries the softer combination instruction, the base station uses a manner in which multiple cells send the same data, or uses a manner in which at least two HARQ processes in one cell or at least two TTIs in one cell send the same data. It should be noted that, the steps 201 and 203 are optional steps.

After acquiring the softer combination instruction, the base station may add the softer combination instruction to an HS-SCCH and send the softer combination instruction to the UE, as shown in steps 204 and 205 in FIG. 2. There are two manners of adding the softer combination instruction to the HS-SCCH. One is an explicit manner, in which the softer combination instruction is indicated by a newly added bit (bit) or an existing bit combination in the HS-SCCH, and the UE is notified that HS-DSCH data sent by the at least two cells, or the at least two HARQ processes in one cell or the at least two TTIs in one cell is the same and softer combination can be performed. The other is an implicit manner, in which the softer combination instruction is indicated by using a parity relationship of a code channel occupied by the HS-SCCH. For example, HS-DSCH data corresponding to HS-SCCHs sent on odd-numbered code channels of multiple cells is the same, and the UE is instructed to perform softer combination on the data of the odd-numbered code channels; or HS-DSCH data corresponding to HS-SCCHs sent on even-numbered code channels of multiple cells is the same, and the UE is instructed to perform softer combination on the data of the odd-numbered code channels.

After receiving the softer combination instruction, the UE performs softer combination and decoding on the HS-DSCH data received from the at least two cells, or the at least two HARQ processes in one cell or the at least two TTIs in one cell, and after the softer combination and decoding are successful, the UE may feed back an acknowledgement response (ACK) to the base station by using a high speed dedicated physical control channel (High speed Dedicated Physical Control Channel, HS-DPCCH), as shown in step 206 in FIG. 2.

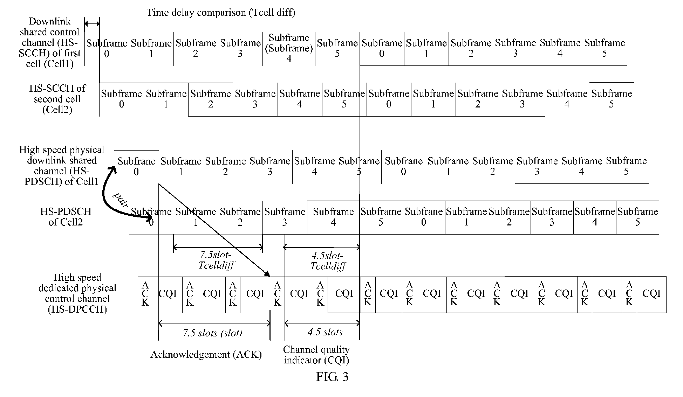

It should be noted that, a concept of paired subframes is defined in the multiflow transmission. As shown in FIG. 3, if a timer difference between a subframe (Subframe) 0 of a first cell (CELL1) and Subframe0 of a second cell (CELL2) is not greater than 1.5 slots, it is considered that Subframe0 of CELL1 and Subframe0 of CELL2 are paired, where CELL1 is a cell whose paired subframe is earlier; or if a timer difference between Subframe0 of CELL1 and Subframe0 of a CELL2 is greater than 1.5 slots and less than 3 slots, it is considered that Subframe0 of CELL2 and Subframe1 of CELL1 are paired, where CELL2 is a cell whose paired subframe is earlier.

Thereby, adding the softer combination instruction to an HS-SCCH and sending the softer combination instruction to the UE may be adding one softer combination instruction only to an HS-SCCH of the cell whose paired subframe is earlier, or may be separately adding one softer combination instruction to HS-SCCHs of at least two cells that schedule the same data. If one softer combination instruction is added only to the HS-SCCH of the cell whose paired subframe is earlier, all redundancy versions (Redundancy and constellation version, RV) of the cell whose paired subframe is earlier and another cell need to have predefined or preconfigured mapping relationships, for example, the RV used by the cell whose paired subframe is earlier is permanently 1 less than the RV used by another cell, as shown in the following Table 1.

**Table 1**

| Cell 1 (whose paired subframe is earlier) | Cell 2 |
|---|---|
| RV version number | RV version number |
| 0 | 1 |
| 1 | 2 |
| 2 | 3 |
| 3 | 4 |
| 4 | 5 |
| 5 | 6 |
| 6 | 7 |
| 7 | 0 |

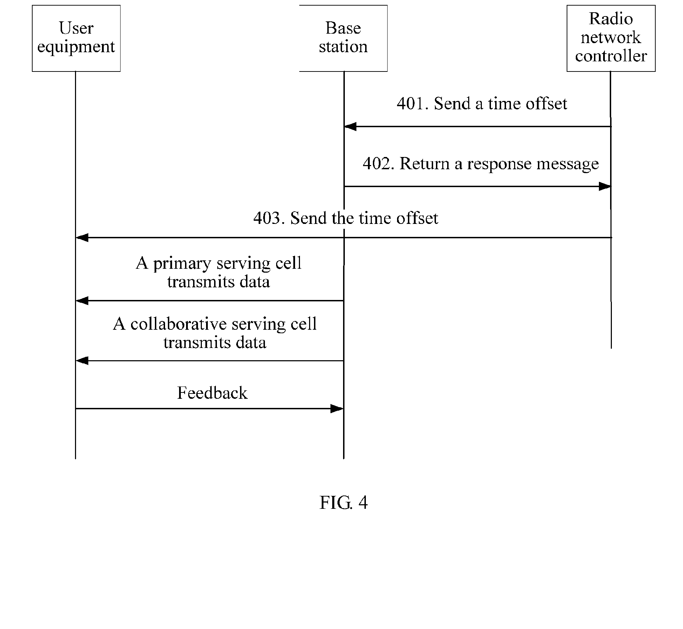

In another implementation manner shown in FIG. 4, the instructing the user equipment to perform softer combination on the received at least two groups of same data in 102 may include: sending a time offset (toffset) configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

When the UE is in the multiflow transmission state, as shown in steps 401 to 403 in FIG. 4, the RNC may add the time offset to a message such as a radio link setup or addition or reconfiguration request (RADIO LINK SETUP REQUEST or RADIO LINK ADDITION REQUEST or RADIO LINK RECONFIGURATION REQUEST) and send the time offset to the base station, and after receiving the time offset, the base station returns a response (RESPONSE) message to the RNC; and the RNC also sends radio resource control (Radio Resource Control, RRC) Protocol signaling to and the time offset and send the time offset to the UE, where the RRC signaling is transparently transmitted to the UE by using the base station.

The time offset is used to indicate a maximum interval between time points at which the at least two cells send the same data to the user equipment, which specifically is a maximum interval between a time point at which a cell whose paired subframe is earlier in multiple cells that participate in multiflow transmission sends HS-DSCH data and a time point at which a cell whose paired subframe is later sends the same data to the UE, thereby instructing the user equipment to perform softer combination on the HS-DSCH data received the cell whose paired subframe is earlier, and HS-DSCH data of another cell received within the time indicated by the time offset, where the maximum interval may be, for example, 6 slots (slots).

In the implementation manner shown in FIG. 4, when the RNC sends an HS-DSCH FP to the base station, the FP may include a connection frame number counter (Connect Frame Number, CFN), where the CFN is used to instruct the cell whose paired subframe is earlier to schedule data carried in HS-DSCH FP at a specified CFN.

After receiving the HS-DSCH data from the cell whose paired subframe is earlier, the UE may receive the HS-DSCH data of the another cell within the time indicated by the time offset; then, the UE determines that the data scheduled by the multiple cells to the UE is the same, and may perform a softer combination operation. After the softer combination and decoding are successful, the UE may feed back an ACK to the base station by using an HS-DPCCH.

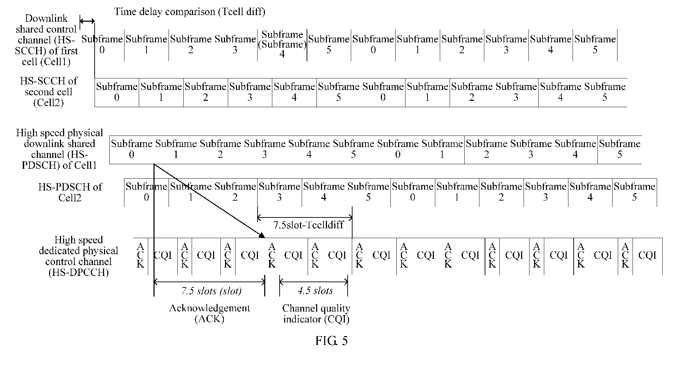

An example is described below. Referring to FIG. 5, CELL1 is the cell whose paired subframe is earlier, and CELL2 is the cell whose paired subframe is later, CELL1 may schedule data to the UE in a subframe (Subframe) 0, and CELL2 may schedule the same data to the UE in Subframe1. The UE receives HS-DSCH data from the cells CELL1 and CELL2 within a time Toffset; then, the UE determines that the data scheduled by the two cells to the UE is the same, and performs a softer combination operation on the data.

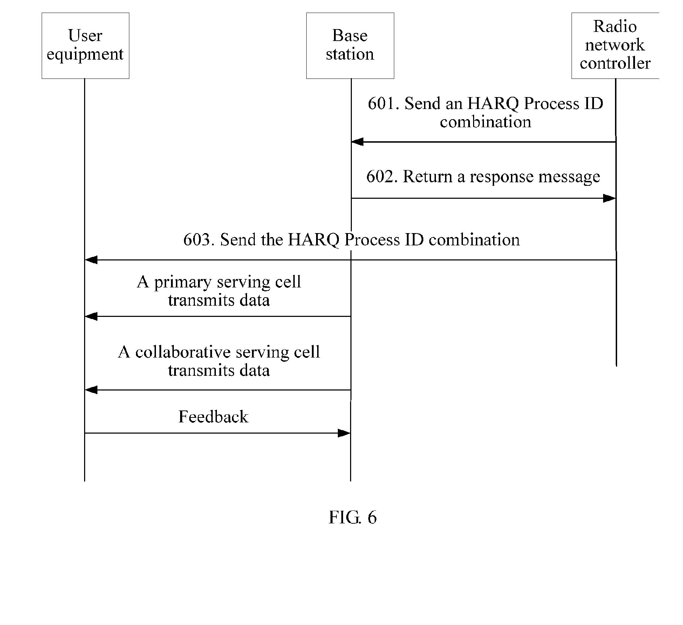

In another implementation manner shown in FIG. 6, the instructing the user equipment to perform softer combination on the received at least two groups of same data in 102 may include: sending a HARQ process identifier (Process ID) combination configured by a radio network controller to the user equipment, where the HARQ Process ID combination is used to instruct the at least two cells that schedule the same data to the user equipment to separately perform the scheduling by using one HARQ Process ID in the HARQ Process ID combination. The radio network controller also transparently transmits the HARQ Process ID combination to the user equipment by using the base station, to instruct the user equipment to perform softer combination on received data of paired subframes of the cells that is sent by the at least two cells by using a HARQ Process ID that belongs to the HARQ Process ID combination.

When the UE is in the multiflow transmission state, the RNC may configure the HARQ Process ID combination in a message such as a radio link setup or addition or reconfiguration request based on a single MAC-d flow or queue or logical channel ID, as shown in steps 601 to 603 in FIG. 6, where the HARQ Process ID combination is used to predefine that cells separately send data by using a specific HARQ process ID, for example, a cell whose paired subframe is earlier sends a data packet by using a HARQ process ID 0, and a cell whose paired subframe is later sends the same data by using a HARQ process ID 2.

After receiving HS-DSCH data from a HARQ process ID preconfigured by the cell whose paired subframe is earlier and receiving the same HS-DSCH data from a HARQ process preconfigured by another cell, the UE performs softer combination and decoding. After the softer combination and decoding are successful, an ACK is fed back to the base station by using an HS-DPCCH.

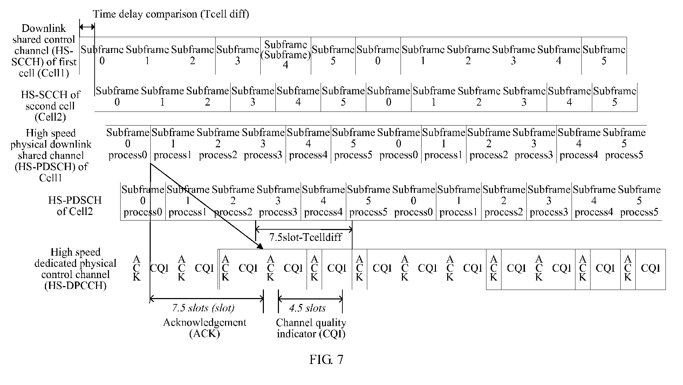

An example is described below. Referring to FIG. 7, CELL1 is the cell whose paired subframe is earlier, CELL2 is the cell whose paired subframe is later. Subframe0 of CELL1 and Subframe0 of CELL2 are paired subframes, Subframe1 of CELL1 and Subframe1 of CELL2 are paired subframes, Subframe2 of CELL1 and Subframe2 of CELL2 are paired subframes, Subframe3 of CELL1 and Subframe3 of CELL2 are paired subframes, and Subframe4 of CELL1 and Subframe4 of CELL2 are paired subframes. Assuming that a HARQ Process ID combination configured by the RNC for the UE and a NodeB includes a HARQ process ID 0 and a HARQ process ID 1, when CELL1 and CELL2 send same data to the UE, CELL1 must send the same data by using the HARQ process ID 0, and CELL2 must send the same data by using the HARQ process ID 1.

The UE detects from an HS-SCCH channel that CELL1 sends HS-DSCH data by using the HARQ process 0 and CELL2 sends HS-DSCH data by using the HARQ process 1; in this case, it is considered that the HS-DSCH data received from paired subframes of CELL1 and CELL2 is the same and softer combination may be performed.

It should be noted that any combination of the foregoing solutions, for example, a combination of a time offset and a HARQ process combination, falls within the protection scope of the present invention. Assuming that CELL1 is the cell whose paired subframe is earlier, CELL2 is the cell whose paired subframe is later, and a configured HARQ process ID combination includes a HARQ process 0 and a HARQ process 1, if the UE receives, in the HARQ process 0, HS-DSCH data sent by CELL1, and receives, within a configured time offset in the HARQ process 1, HS-DSCH data sent by CELL2, it is considered that the two cells send same data and softer combination may be performed.

The foregoing mainly describes an example in which at least two cells send at least two groups of same data to user equipment. The following additionally describes another implementation manner in which at least two groups of same data are sent to user equipment by using sending processes of at least two HARQ processes or at least two transmission time intervals TTIs in one cell.

Identifiers of HARQ processes for sending same data may be predefined, for example, it is predefined that a HARQ Process ID0 and a HARQ Process ID1 send same data to a UE; or, identifiers of HARQ processes for sending same data may be configured, for example, a radio network controller (RNC) configures for a user equipment and a base station that same data is sent in a HARQ Process ID0 and a HARQ Process ID1. A quantity of HARQ processes may be predefined, for example, predefined to be 2; or may be configured, for example, a quantity of HARQ processes configured by the RNC for the UE and the base station is 2. When sending an HS-SCCH to the UE, the base station informs the UE that data sent in a predefined quantity of HARQ processes is the same. For example, a quantity of HARQ processes that consecutively send same data is 2, and the base station adds a process identifier 0 to the HS-SCCH, and informs the UE that same data is sent in 2 consecutive processes, which indicates that data sent by in HARQ process 0 and the HARQ process 1 is the same. The UE performs softer combination on the received same data sent in the at least two HARQ processes, and if the data is correctly decoded, feeds back an ACK; otherwise, feeds back an NACK. It should be noted that, HARQ processes used to send same data may be consecutive, or may be non-consecutive. For example, the HARQ process 0 and a HARQ process 3 may send same data to the UE.

Alternatively, the base station sends same data to the UE in a same HARQ Process ID. For example, the UE receives HS-DSCH data in the HARQ process ID1, and then receives HS-DSCH data in the HARQ Process ID1 within a time window T; in this case, it is considered that the two groups of data are the same and softer combination may be performed. The time T is configurable or predefined.

The foregoing describes in detail the data transmission method provided in this embodiment of the present invention by using a base station as an execution body. By using the method, in a UMTS multiflow transmission solution, user equipment may process received data in a more reliable softer combination manner, thereby improving reliability, and reducing a call drop rate.

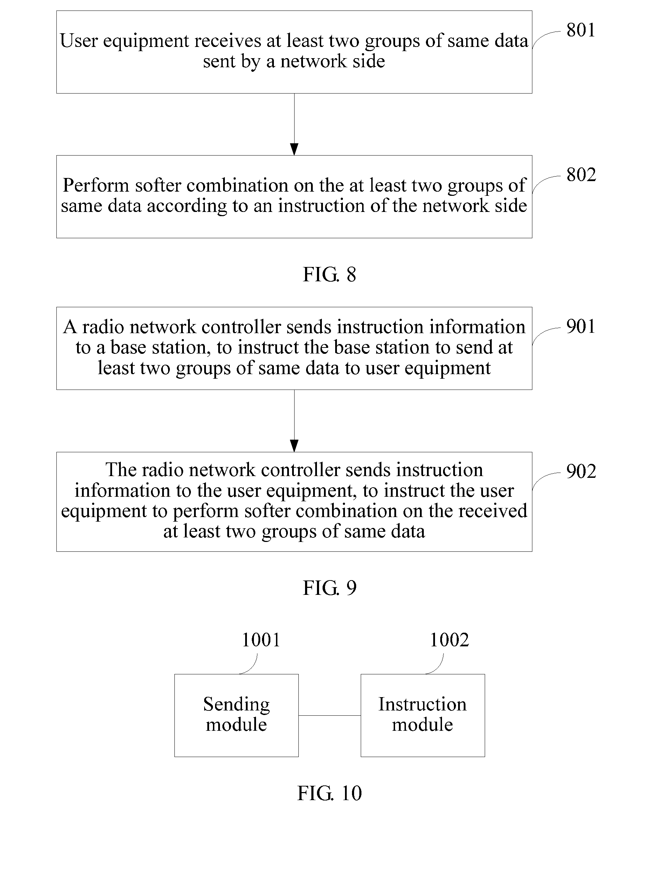

Referring to FIG. 8, an embodiment of the present invention further provides a data transmission method, and the method is applied in the field of multiflow transmission based on a UMTS system. The method in this embodiment is described by using user equipment as an execution body.
801: User equipment receives at least two groups of same data sent by a network side.
802: Perform softer combination on the at least two groups of same data according to an instruction of the network side.

The receiving, by user equipment, at least two groups of same data sent by a network side in 801 specifically may be: receiving, by the user equipment, the at least two groups of same data that are sent by a base station by using at least two cells, or receiving the at least two groups of same data that are sent by a base station by using at least two HARQ processes or at least two TTIs in one cell.

In an implementation manner, the performing softer combination on the at least two groups of same data according to an instruction of the network side in 802 includes: receiving a softer combination instruction that is carried in an HS-SCCH and sent by the base station, and performing softer combination on the at least two groups of same data according to the softer combination instruction. Optionally, the softer combination instruction is indicated by using a bit in the downlink shared control channel HS-SCCH or by using a parity relationship of a code channel occupied by the HS-SCCH.

In another implementation manner, the performing softer combination on the at least two groups of same data according to an instruction of the network side in 802 includes: receiving a time offset from a radio network controller, and performing softer combination on data that is received from the at least two cells within a time indicated by the time offset. Specifically, softer combination is performed on received HS-DSCH data of a cell whose paired subframe is earlier, and HS-DSCH data, received from then on within the time indicated by the time offset toffset, of a cell whose paired subframe is later; or softer combination is performed on HS-DSCH data received by a receiving reference cell, and HS-DSCH data received by a non-receiving reference cell within the time indicated by the time offset.

In still another implementation manner, the performing softer combination on the at least two groups of same data according to an instruction of the network side in 802 includes: receiving a HARQ Process ID combination from a radio network controller, and performing softer combination on received data that is sent by the at least two cells by using a HARQ Process ID that belongs to the HARQ Process ID combination.

For detailed description about the foregoing steps in this embodiment, reference may be made to relevant content in the embodiment shown in FIG. 1, and details are not described herein again.

The foregoing describes in detail the data transmission method provided in this embodiment of the present invention by using user equipment as an execution body. By using the method, in a UMTS multiflow transmission solution, the user equipment may process received data in a more reliable softer combination manner, thereby improving reliability, and reducing a call drop rate.

Referring to FIG. 9, an embodiment of the present invention further provides a data transmission method, and the method is applied in the field of multiflow transmission based on a UMTS system. The method in this embodiment is described by using a radio network controller as an execution body.
901: A radio network controller sends instruction information to a base station, to instruct the base station to send at least two groups of same data to user equipment.
902: The radio network controller sends instruction information to the user equipment, to instruct the user equipment to perform softer combination on the received at least two groups of same data.

Further, the instructing the base station to send at least two groups of same data to user equipment includes: instructing the base station to send the same data to the user equipment by using at least two cells, or send the same data to the user equipment by using at least two HARQ processes or at least two TTIs in one cell.

In an implementation manner, the instruction information is specifically a softer combination instruction.

The sending, by a radio network controller, instruction information to a base station in 901 may include: adding the softer combination instruction to an HS-DSCH frame protocol (FP) and sending the softer combination instruction to the base station, to instruct the base station to send the at least two groups of same data to the user equipment by using the at least two cells, or the at least two HARQ processes in one cell or the at least two TTIs in one cell, where the same data that needs to be sent is data carried in the HS-DSCH FP.

The softer combination instruction may also be configured in radio link setup or addition or reconfiguration request signaling based on a MAC-d flow identifier or a queue identifier or a logical channel identifier, and is used to instruct the base station to send the at least two groups of same data to the user equipment; and the same data that needs to be sent is HS-DSCH data corresponding to the MAC-d flow or the queue or the logical channel ID.

In another implementation manner, the instruction information is specifically a time offset configured by the radio network controller, where the time offset is used to indicate a maximum interval between time points at which the at least two cells send the same data to the user equipment, so that the user equipment performs softer combination on data that is received from the at least two cells within a time indicated by the time offset.

In still another implementation manner, the instruction information is specifically a HARQ Process ID combination configured by the radio network controller, and is used to instruct the at least two cells to send the same data to the user equipment separately by using one specific HARQ Process ID in the HARQ Process ID combination, so that the user equipment performs softer combination on the data received from the at least two cells. Optionally, the HARQ Process ID may be configured in a radio link setup or addition or reconfiguration request signaling message based on a single MAC-d flow or queue or logical channel ID.

For detailed description about the foregoing steps in this embodiment, reference may be made to relevant content in the embodiment shown in FIG. 1, and details are not described herein again.

The foregoing describes in detail the data transmission method provided in this embodiment of the present invention by using user equipment as an execution body. By using the method, in a UMTS multiflow transmission solution, the user equipment may process received data in a more reliable softer combination manner, thereby improving reliability, and reducing a call drop rate.

Referring to FIG. 10, an embodiment of the present invention provides a base station, which is applied in the field of multiflow transmission based on a UMTS system. The base station includes: a sending module 1001, configured to send at least two groups of same data to user equipment; and an instruction module 1002, configured to instruct the user equipment to perform softer combination on the received at least two groups of same data.

The sending module 1001 may be specifically configured to send the same data to the user equipment by using at least two cells, or send the same data to the user equipment by using at least two HARQ processes or at least two TTIs in one cell.

In an implementation manner, the instruction module 1002 may be specifically configured to send a softer combination instruction to the user equipment, to instruct the user equipment to perform softer combination on the received same data sent by the at least two cells. The softer combination instruction may be carried in an HS-SCCH sent to the user equipment.

Still further, the instruction module 1002 may be specifically configured to use a bit in the HS-SCCH to indicate the softer combination instruction, or use a parity relationship of a code channel occupied by the HS-SCCH to indicate the softer combination instruction.

In another implementation manner, the instruction module 1002 may be specifically configured to send a time offset configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

In still another implementation manner, the instruction module 1002 may be specifically configured to send a HARQ process identifier Process ID combination configured by a radio network controller to the user equipment, where the HARQ Process ID combination is used to instruct the at least two cells to send the same data to the user equipment separately by using one HARQ Process ID in the HARQ Process ID combination, to instruct the user equipment to perform softer combination on the data received from the at least two cells.

For detailed description about the foregoing modules and units in this embodiment, reference may be made to relevant content in the embodiment shown in FIG. 1, and details are not described herein again.

The foregoing describes in detail the base station provided in this embodiment of the present invention. By using the base station, in a UMTS multiflow transmission solution, user equipment may process received data in a more reliable softer combination manner, thereby improving reliability, and reducing a call drop rate.

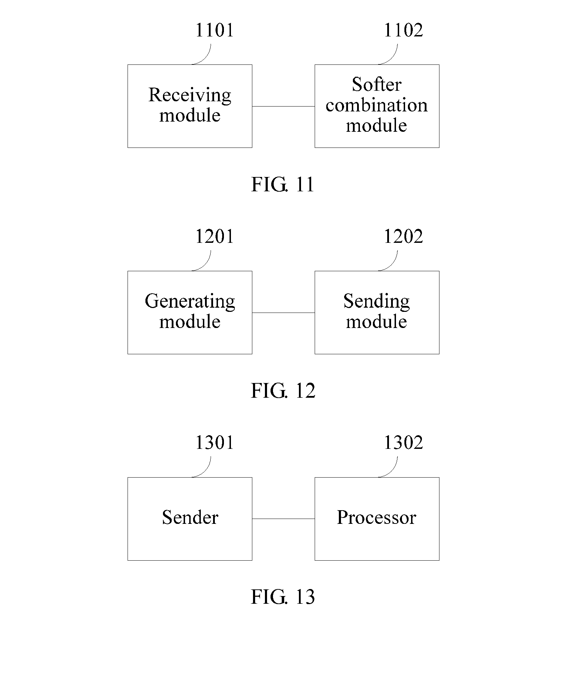

Referring to FIG. 11, an embodiment of the present invention provides user equipment, which is applied in the field of multiflow transmission based on a UMTS system. The user equipment includes: a receiving module 1101, configured to receive at least two groups of same data sent by a network side; and a softer combination module 1102, configured to perform softer combination on the at least two groups of same data according to an instruction of the network side.

The receiving module 1101 may be specifically configured to receive the same data that is sent by a base station by using at least two cells, or receive the same data that is sent by a base station by using at least two HARQ processes or at least two TTIs in one cell.

In an implementation manner, the receiving module 1101 is further configured to receive a softer combination instruction that is carried in an HS-SCCH and sent by the base station; and the softer combination module 1102 is specifically configured to perform softer combination on the at least two groups of same data according to the softer combination instruction.

In another implementation manner, the receiving module 1101 is further configured to receive a time offset from a radio network controller; and the softer combination module 1102 is specifically configured to perform softer combination on data that is received from the at least two cells within a time indicated by the time offset.

In still another implementation manner, the receiving module 1101 is further configured to receive a HARQ Process ID combination from a radio network controller; and the softer combination module 1102 is specifically configured to perform softer combination on received data that is sent by the at least two cells by using a HARQ Process ID that belongs to the HARQ Process ID combination.

For detailed description about the foregoing modules and units in this embodiment, reference may be made to relevant content in the embodiment shown in FIG. 1, and details are not described herein again.

The foregoing describes in detail the user equipment provided in this embodiment of the present invention. In a UMTS multiflow transmission solution, the user equipment may process received data in a more reliable softer combination manner, thereby improving reliability, and reducing a call drop rate.

Referring to FIG. 12, an embodiment of the present invention provides a radio network controller, which is applied in the field of multiflow transmission based on a UMTS system. The radio network controller includes: a generating module 1201, configured to generate instruction information; and a sending module 1202, configured to send the instruction information to a base station and user equipment, to instruct the base station to send at least two groups of same data to the user equipment, and instruct the user equipment to perform softer combination on the received at least two groups of same data.

Further, the instruction information is specifically used to instruct the base station to send the same data to the user equipment by using at least two cells, or send the same data to the user equipment by using at least two HARQ processes or at least two TTIs in one cell.

In an implementation manner, the generating module 1201 is specifically configured to generate a softer combination instruction as the instruction information; and the sending module 1202 is specifically configured to add the softer combination instruction to an HS-DSCH frame protocol FP and send the softer combination instruction to the base station, to instruct the base station to send the at least two groups of same data to the user equipment, where the same data that needs to be sent is data carried in the HS-DSCH FP.

Further, the sending module 1202 may be configured to configure the softer combination instruction in radio link setup or addition or reconfiguration request signaling based on a MAC-d flow or a queue or a logical channel ID, to instruct the at least two cells to send the same data to the user equipment, where the same data that needs to be sent is high speed downlink shared channel HS-DSCH data corresponding to the MAC-d flow or the queue or the logical channel ID.

In another implementation manner, the generating module 1201 may be specifically configured to configure a time offset as the instruction information, where the time offset indicates a maximum interval between time points at which the at least two cells send the same data to the user equipment, to instruct the user equipment to perform softer combination on data that is received from the at least two cells within a time indicated by the time offset.

In still another implementation manner, the generating module 1201 may be specifically configured to configure a HARQ Process ID combination as a softer combination instruction, to instruct the at least two cells to send the same data to the user equipment separately by using one HARQ Process ID in the HARQ Process ID combination, so that the user equipment performs softer combination on the data received from the at least two cells.

For detailed description about the foregoing modules and units in this embodiment, reference may be made to relevant content in the embodiment shown in FIG. 1, and details are not described herein again.

The foregoing describes in detail the radio network controller provided in this embodiment of the present invention. By using the radio network controller, in a UMTS multiflow transmission solution, user equipment may process received data in a more reliable softer combination manner, thereby improving reliability, and reducing a call drop rate.

Referring to FIG. 13, an embodiment of the present invention provides a base station, which is applied in the field of multiflow transmission based on a UMTS system. The base station includes: a transmitter 1301, configured to send at least two groups of same data to user equipment; and a processor 1302, configured to generate instruction information, where the instruction information is sent to the user equipment by using the transmitter, and is used to instruct the user equipment to perform softer combination on the received at least two groups of same data.

Optionally, the transmitter 1301 is specifically configured to send the same data to the user equipment by using at least two cells, or send the same data to the user equipment by using at least two HARQ processes or at least two TTIs in one cell.

Optionally, the processor 1302 is configured to generate a softer combination instruction as the instruction information; and the transmitter 1301 is further configured to add the softer combination instruction to an HS-SCCH and send the softer combination instruction to the user equipment, where the softer combination instruction is used to instruct the user equipment to perform softer combination on the received at least two groups of same data.

Optionally, the transmitter 1301 is further configured to send a time offset configured by a radio network controller to the user equipment, where the time offset is used to indicate a maximum interval between time points at which the at least two cells send the same data to the user equipment, to instruct the user equipment to perform softer combination on data that is received from the at least two cells within a time indicated by the time offset.

Optionally, the transmitter 1301 is further configured to send a HARQ Process ID combination configured by a radio network controller to the user equipment, where the HARQ Process ID combination is used to instruct the at least two cells to send the same data to the user equipment separately by using one HARQ Process ID in the HARQ Process ID combination, to instruct the user equipment to perform softer combination on the data received from the at least two cells.

The foregoing describes in detail the base station provided in this embodiment of the present invention. By using the base station, in a UMTS multiflow transmission solution, user equipment may process received data in a more reliable softer combination manner, thereby improving reliability, and reducing a call drop rate.

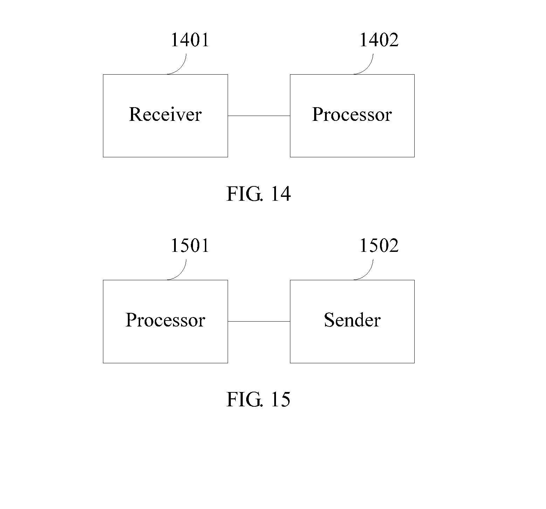

Referring to FIG. 14, an embodiment of the present invention provides user equipment, which is applied in the field of multiflow transmission based on a UMTS system. The user equipment includes: a receiver 1401, configured to receive at least two groups of same data sent by a network side; and a processor 1402, configured to perform softer combination on the at least two groups of same data according to an instruction of the network side.

Optionally, the receiver 1401 is specifically configured to receive the same data that is sent by a base station by using at least two cells, or receive the same data that is sent by a base station by using at least two HARQ processes or at least two TTIs in one cell.

Optionally, the receiver 1401 is further configured to receive a softer combination instruction that is carried in an HS-SCCH and sent by the base station; and the processor 1402 is specifically configured to perform softer combination on the at least two groups of same data according to the softer combination instruction.

Optionally, the receiver 1401 is further configured to receive a time offset from a radio network controller; and the processor 1402 is specifically configured to perform softer combination on data that is received from the at least two cells within a time indicated by the time offset.

Optionally, the receiver 1401 is further configured to receive a HARQ Process ID combination from a radio network controller; and the processor 1402 is specifically configured to perform softer combination on received data that is sent by the at least two cells by using a HARQ Process ID that belongs to the HARQ Process ID combination.

The foregoing describes in detail user equipment provided in this embodiment of the present invention. In a UMTS multiflow transmission solution, the user equipment may process received data in a more reliable softer combination manner, thereby improving reliability, and reducing a call drop rate.

Referring to FIG. 15, an embodiment of the present invention provides a radio network controller, which is applied in the field of multiflow transmission based on a UMTS system. The radio network controller includes: a processor 1501, configured to generate instruction information; and a transmitter 1502, configured to send the instruction information to a base station and user equipment, to instruct the base station to send at least two groups of same data to the user equipment, and instruct the user equipment to perform softer combination on the received at least two groups of same data.

Optionally, the instruction information is specifically used to instruct the base station to send the same data to the user equipment by using at least two cells, or send the same data to the user equipment by using at least two HARQ processes or at least two TTIs in one cell.

Optionally, the processor 1501 is specifically configured to generate a softer combination instruction as the instruction information; and the transmitter 1502 is specifically configured to add the softer combination instruction to an HS-DSCH frame protocol FP and send the softer combination instruction to the base station, to instruct the base station to send the at least two groups of same data to the user equipment.

Optionally, the processor 1501 is specifically configured to generate a softer combination instruction as the instruction information; and the transmitter 1502 is specifically configured to configure the softer combination instruction in radio link setup or addition or reconfiguration request signaling based on a MAC-d flow or a queue or a logical channel ID, to instruct the base station to send the at least two groups of same data to the user equipment.

Optionally, the processor 1501 is specifically configured to configure a time offset as the instruction information, where the time offset is used to indicate a maximum interval between time points at which the at least two cells send the same data to the user equipment, and instruct the user equipment to perform softer combination on data that is received from the at least two cells within a time indicated by the time offset.

Optionally, the processor 1501 is specifically configured to configure a HARQ Process ID combination as the instruction information, where the HARQ Process ID combination is used to instruct the at least two cells to send the same data to the user equipment separately by using one HARQ Process ID in the HARQ Process ID combination, and instruct the user equipment to perform softer combination on the data received from the at least two cells.

The foregoing describes in detail the radio network controller provided in this embodiment of the present invention. By using the radio network controller, in a UMTS multiflow transmission solution, user equipment may process received data in a more reliable softer combination manner, thereby improving reliability, and reducing a call drop rate.

It may be clearly understood by a person skilled in the art that, for the purpose of convenient and brief description, division of the foregoing function modules is taken as an example for illustration. In actual application, the foregoing functions may be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing describes in detail the data transmission method and the corresponding apparatuses including the base station, the user equipment, and the radio network controller that are provided in the embodiments of the present invention. However, the description of the embodiments is only intended to help understand the method and core idea of the present invention, and shall not be construed as limiting the present invention. Any variation or replacement readily figured out by a person skilled in the art within the technical scope disclosed in the present invention shall fall within the protection scope of the present invention.

## Claims

1. A data transmission method, comprising:
sending at least two groups of same data to user equipment; and
instructing the user equipment to perform softer combination on the received at least two groups of same data.

2. The method according to claim 1, wherein the sending at least two groups of same data to user equipment comprises:
sending, by a base station, the same data to the user equipment by using at least two cells; or
sending, by a base station, the same data to the user equipment by using at least two hybrid automatic repeat request HARQ processes or at least two transmission time intervals TTIs in one cell.

3. The method according to claim 2, wherein the instructing the user equipment to perform softer combination on the received at least two groups of same data comprises:
adding a softer combination instruction to a downlink shared control channel HS-SCCH and sending the softer combination instruction to the user equipment, wherein the softer combination instruction is used to instruct the user equipment to perform softer combination on the received at least two groups of same data.

4. The method according to claim 3, wherein the adding the softer combination instruction to the HS-SCCH comprises:
using a bit in the HS-SCCH to indicate the softer combination instruction, or using a parity relationship of a code channel occupied by the HS-SCCH to indicate the softer combination instruction.

5. The method according to claim 2, wherein the method further comprises:
sending a time offset configured by a radio network controller to the user equipment; wherein
the time offset is used to indicate a maximum interval between time points at which the at least two cells send the same data to the user equipment, to instruct the user equipment to perform softer combination on data that is received from the at least two cells within a time indicated by the time offset.

6. The method according to claim 2, wherein the method further comprises:
sending a HARQ process identifier Process ID combination configured by a radio network controller to the user equipment; wherein
the HARQ Process ID combination is used to instruct the at least two cells to send the same data to the user equipment separately by using one HARQ Process ID in the HARQ Process ID combination, to instruct the user equipment to perform softer combination on data received from the at least two cells.

7. A data transmission method, comprising:
Receiving, by user equipment, at least two groups of same data sent by a network side; and
Performing softer combination on the at least two groups of same data according to an instruction of the network side.

8. The method according to claim 7, wherein the receiving, by user equipment, at least two groups of same data sent by a network side comprises:
receiving, by the user equipment, the at least two groups of same data that are sent by a base station by using at least two cells, or receiving the at least two groups of same data that are sent by a base station by using at least two HARQ processes or at least two transmission time intervals TTIs in one cell.

9. The method according to claim 8, wherein the performing softer combination on the at least two groups of same data according to an instruction of the network side comprises:
receiving a softer combination instruction that is carried in an HS-SCCH and sent by the base station, and performing softer combination on the at least two groups of same data according to the softer combination instruction.

10. The method according to claim 9, wherein:
the softer combination instruction is indicated by using a bit in the HS-SCCH or by using a parity relationship of a code channel occupied by the HS-SCCH.

11. The method according to claim 8, wherein the performing softer combination on the at least two groups of same data according to an instruction of the network side comprises:
receiving a time offset from a radio network controller, and performing softer combination on data that is received from the at least two cells within a time indicated by the time offset.

12. The method according to claim 11, wherein the performing softer combination on data that is received from the at least two cells within a time indicated by the time offset comprises:
performing softer combination on received HS-DSCH data of a cell whose paired subframe is earlier in multiflow transmission, and HS-DSCH data, received within the time indicated by the time offset, of a cell whose paired subframe is later in multiflow transmission; or
performing softer combination on HS-DSCH data received by a receiving reference cell, and HS-DSCH data received by a non-receiving reference cell within the time indicated by the time offset.

13. The method according to claim 8, wherein the performing softer combination on the at least two groups of same data according to an instruction of the network side comprises:
receiving a HARQ Process ID combination from a radio network controller, and performing softer combination on received data that is sent by the at least two cells separately by using a HARQ Process ID that belongs to the HARQ Process ID combination.

14. A data transmission method, comprising:
sending, by a radio network controller, instruction information to a base station, to instruct the base station to send at least two groups of same data to user equipment; and
sending, by the radio network controller, instruction information to the user equipment, to instruct the user equipment to perform softer combination on the received at least two groups of same data.

15. The method according to claim 14, wherein the instructing the base station to send at least two groups of same data to user equipment comprises:
instructing the base station to send the same data to the user equipment by using at least two cells, or send the same data to the user equipment by using at least two HARQ processes or at least two TTIs in one cell.

16. The method according to claim 15, wherein:
the instruction information is specifically a softer combination instruction, and the sending, by a radio network controller, instruction information to a base station comprises:
adding the softer combination instruction to an HS-DSCH frame protocol FP and sending the softer combination instruction to the base station, to instruct the base station to send the at least two groups of same data to the user equipment.

17. The method according to claim 15, wherein:
the instruction information is specifically a softer combination instruction, and the sending, by a radio network controller, instruction information to a base station comprises:
configuring the softer combination instruction in radio link setup or addition or reconfiguration request signaling based on a MAC-d flow identifier or a queue identifier or a logical channel identifier, to instruct the base station to send the at least two groups of same data to the user equipment.

18. The method according to claim 15, wherein:
the instruction information is specifically a time offset configured by the radio network controller, and is used to indicate a maximum interval between time points at which the at least two cells send the same data to the user equipment, and instruct the user equipment to perform softer combination on data that is received from the at least two cells within a time indicated by the time offset.

19. The method according to claim 15, wherein:
the instruction information is specifically a HARQ Process ID combination configured by the radio network controller, and is used to instruct the at least two cells to send the same data to the user equipment separately by using one HARQ Process ID in the HARQ Process ID combination, and instruct the user equipment to perform softer combination on data received from the at least two cells.

20. A base station, comprising:
a sending module, configured to send at least two groups of same data to user equipment; and
an instruction module, configured to instruct the user equipment to perform softer combination on the received at least two groups of same data.

21. The base station according to claim 20, wherein:
the sending module is specifically configured to send the same data to the user equipment by using at least two cells, or send the same data to the user equipment by using at least two HARQ processes or at least two TTIs in one cell.

22. The base station according to claim 21, wherein:
the instruction module is specifically configured to add a softer combination instruction to an HS-SCCH and send the softer combination instruction to the user equipment, to instruct the user equipment to perform softer combination on the received same data sent by the at least two cells.

23. The base station according to claim 22, wherein:
the instruction module is specifically configured to use a bit in the HS-SCCH to indicate the softer combination instruction, or use a parity relationship of a code channel occupied by the HS-SCCH to indicate the softer combination instruction.

24. The base station according to claim 21, wherein:
the instruction module is specifically configured to send a time offset configured by a radio network controller to the user equipment, wherein the time offset is used to indicate a maximum interval between time points at which the at least two cells send the same data to the user equipment, to instruct the user equipment to perform softer combination on data that is received from the at least two cells within a time indicated by the time offset.

25. The base station according to claim 21, wherein:
the instruction module is specifically configured to send a HARQ process identifier Process ID combination configured by a radio network controller to the user equipment, wherein the HARQ Process ID combination is used to instruct the at least two cells to send the same data to the user equipment separately by using one HARQ Process ID in the HARQ Process ID combination, to instruct the user equipment to perform softer combination on data received from the at least two cells.

26. User equipment, comprising:
a receiving module, configured to receive at least two groups of same data sent by a network side; and
a softer combination module, configured to perform softer combination on the at least two groups of same data according to an instruction of the network side.

27. The user equipment according to claim 26, wherein:
the receiving module is specifically configured to receive the same data that is sent by a base station by using at least two cells, or receive the same same data that is sent by a base station by using at least two HARQ processes or at least two TTIs in one cell.

28. The user equipment according to claim 27, wherein:
the receiving module is further configured to receive a softer combination instruction that is carried in an HS-SCCH and sent by the base station; and
the softer combination module is specifically configured to perform softer combination on the data of the at least two groups of data according to the softer combination instruction.

29. The user equipment according to claim 27, wherein:
the receiving module is further configured to receive a time offset from a radio network controller; and
the softer combination module is specifically configured to perform softer combination on data that is received from the at least two cells within a time indicated by the time offset.

30. The user equipment according to claim 27, wherein:
the receiving module is further configured to receive a HARQ Process ID combination from a radio network controller; and
the softer combination module is specifically configured to perform softer combination on received data that is sent by the at least two cells separately by using a HARQ Process ID that belongs to the HARQ Process ID combination.

31. A radio network controller, comprising:
a generating module, configured to generate instruction information; and
a sending module, configured to send the instruction information to a base station and user equipment, to instruct the base station to send at least two groups of same data to the user equipment, and instruct the user equipment to perform softer combination on the received at least two groups of same data.

32. The radio network controller according to claim 31, wherein:
the instruction information is specifically used to instruct the base station to send the same data to the user equipment by using at least two cells, or send the same data to the user equipment by using at least two HARQ processes or at least two TTIs in one cell.

33. The radio network controller according to claim 32, wherein:
the generating module is specifically configured to generate a softer combination instruction as the instruction information; and
the sending module is specifically configured to add the softer combination instruction to an HS-DSCH frame protocol FP and send the softer combination instruction to the base station, to instruct the base station to send the at least two groups of same data to the user equipment.

34. The radio network controller according to claim 32, wherein:
the generating module is specifically configured to generate a softer combination instruction as the instruction information; and
the sending module is specifically configured to configure the softer combination instruction in radio link setup or addition or reconfiguration request signaling based on a MAC-d flow or a queue or a logical channel ID, to instruct the base station to send the at least two groups of same data to the user equipment.

35. The radio network controller according to claim 32, wherein:
the generating module is specifically configured to configure a time offset as the instruction information, wherein the time offset is used to indicate a maximum interval between time points at which the at least two cells send the same data to the user equipment, and instruct the user equipment to perform softer combination on data that is received from the at least two cells within a time indicated by the time offset.

36. The radio network controller according to claim 32, wherein:
the generating module is specifically configured to configure a HARQ Process ID combination as the instruction information, wherein the HARQ Process ID combination is used to instruct the at least two cells to send the same data to the user equipment separately by using one HARQ Process ID in the HARQ Process ID combination, and instruct the user equipment to perform softer combination on data received from the at least two cells.

37. Abase station, comprising:
a transmitter, configured to send at least two groups of same data to user equipment; and
a processor, configured to generate instruction information, wherein the instruction information is sent to the user equipment by using the transmitter, and is used to instruct the user equipment to perform softer combination on the received at least two groups of same data.

38. The base station according to claim 37, wherein:
the transmitter is specifically configured to send the same data to the user equipment by using at least two cells, or send the same data to the user equipment by using at least two HARQ processes or at least two TTIs in one cell.

39. The base station according to claim 38, wherein:
the processor is configured to generate a softer combination instruction as the instruction information; and
the transmitter is further configured to add the softer combination instruction to an HS-SCCH and send the softer combination instruction to the user equipment, wherein the softer combination instruction is used to instruct the user equipment to perform softer combination on the received at least two groups of same data.

40. The base station according to claim 38, wherein:
the transmitter is further configured to send a time offset configured by a radio network controller to the user equipment, wherein the time offset is used to indicate a maximum interval between time points at which the at least two cells send the same data to the user equipment, to instruct the user equipment to perform softer combination on data that is received from the at least two cells within a time indicated by the time offset.

41. The base station according to claim 38, wherein:
the transmitter is further configured to send a HARQ Process ID combination configured by a radio network controller to the user equipment, wherein the HARQ Process ID combination is used to instruct the at least two cells to send the same data to the user equipment separately by using one HARQ Process ID in the HARQ Process ID combination, to instruct the user equipment to perform softer combination on data received from the at least two cells.

42. User equipment, comprising:
a receiver, configured to receive at least two groups of same data sent by a network side; and
a processor, configured to perform softer combination on the at least two groups of same data according to an instruction of the network side.

43. The user equipment according to claim 42, wherein:
the receiver is specifically configured to receive the same data that is sent by a base station by using at least two cells, or receive the same data that is sent by a base station by using at least two HARQ processes or at least two TTIs in one cell.

44. The user equipment according to claim 43, wherein:
the receiver is further configured to receive a softer combination instruction that is carried in an HS-SCCH and sent by the base station; and
the processor is specifically configured to perform softer combination on the at least two groups of same data according to the softer combination instruction.

45. The user equipment according to claim 43, wherein:
the receiver is further configured to receive a time offset from a radio network controller; and
the processor is specifically configured to perform softer combination on data that is received from the at least two cells within a time indicated by the time offset.

46. The user equipment according to claim 43, wherein:
the receiver is further configured to receive a HARQ Process ID combination from a radio network controller; and
the processor is specifically configured to perform softer combination on received data that is sent by the at least two cells separately by using a HARQ Process ID that belongs to the HARQ Process ID combination.

47. A radio network controller, comprising:
a processor, configured to generate instruction information; and
a transmitter, configured to send the instruction information to a base station and user equipment, to instruct the base station to send at least two groups of same data to the user equipment, and instruct the user equipment to perform softer combination on the received at least two groups of same data.

48. The radio network controller according to claim 47, wherein:
the instruction information is specifically used to instruct the base station to send the same data to the user equipment by using at least two cells, or send the same data to the user equipment by using at least two HARQ processes or at least two TTIs in one cell.

49. The radio network controller according to claim 48, wherein:
the processor is specifically configured to generate a softer combination instruction as the instruction information; and
the transmitter is specifically configured to add the softer combination instruction to an HS-DSCH frame protocol FP and send the softer combination instruction to the base station, to instruct the base station to send the at least two groups of same data to the user equipment.

50. The radio network controller according to claim 48, wherein:
the processor is specifically configured to generate a softer combination instruction as the instruction information; and
the transmitter is specifically configured to configure the softer combination instruction in radio link setup or addition or reconfiguration request signaling based on a MAC-d flow or a queue or a logical channel ID, to instruct the base station to send the at least two groups of same data to the user equipment.

51. The radio network controller according to claim 48, wherein:
the processor is specifically configured to configure a time offset as the instruction information, wherein the time offset is used to indicate a maximum interval between time points at which the at least two cells send the same data to the user equipment, and instruct the user equipment to perform softer combination on data that is received from the at least two cells within a time indicated by the time offset.

52. The radio network controller according to claim 48, wherein:
the processor is specifically configured to configure a HARQ Process ID combination as the instruction information, wherein the HARQ Process ID combination is used to instruct the at least two cells to send the same data to the user equipment separately by using one HARQ Process ID in the HARQ Process ID combination, and instruct the user equipment to perform softer combination on data received from the at least two cells.
